**Europäisches Patentamt**

**European Patent Office**

**Office européen des brevets**

(19)

(11) Numéro de publication: **0 317 541**
**A1**

## (12) DEMANDE DE BREVET EUROPEEN

(21) Numéro de dépôt: **88870168.7**

(22) Date de dépôt: **09.11.88**

(51) Int. Cl.⁴: **H 02 J 13/00**
**H 04 Q 9/14**

(30) Priorité: **17.11.87 BE 8701302**

(43) Date de publication de la demande:
**24.05.89 Bulletin 89/21**

(84) Etats contractants désignés:
**AT CH DE ES FR GB IT LI NL**

(71) Demandeur: **TECO S.A.**
**Rue Servais Malaise, 29**
**B-4030 Bois-de-Breux (BE)**

(72) Inventeur: **Bonameau, Jean-Marie**
**Rue Servais Malaise, 29**
**B-4030 Bois-de-Breux (BE)**

(74) Mandataire: **Vanhamme, Joseph Louis**
**Office Parette (Fred Maes) 33 Avenue d'Auderghem Boîte 4**
**B-1040 Bruxelles (BE)**

(54) **Procédé de télécommande par un poste central d'une multitude de postes locaux et un système pour la mise en oeuvre de ce procédé.**

(57) L'invention concerne un procédé de télécommande par un poste central d'une multitude de postes locaux équipés d'au moins un dispositif récepteur et relié au poste central à travers le réseau électrique et un système pour la mise en oeuvre de ce procédé.

Le procédé est caractérisé en ce qu'un message échangé entre le poste central (MG) et un poste local(REC,MB) comporte des portions de synchronisation, d'adresse et de données, chaque portion comprenant un nombre spécifique et différent de chiffres binaires et en ce que l'on soumet chaque message à la réception à une vérification de sa structure en vue d'une détection d'erreur.

L'invention peut être utilisée dans tout genre d'industrie.

_Fig. 1_

## Description

## Procédé de télécommande par un poste central d'une multitude de postes locaux et un système pour la mise en oeuvre de ce procédé

La présente invention concerne un procédé de télécommande par un poste central d'une multitude de postes locaux équipés d'au moins un dispositif récepteur et relié au poste central à travers le réseau électrique et un système pour la mise en oeuvre de ce procédé.

On connait déjà des procédés et systèmes de ce type. Mais ceux-ci ne sont pas satisfaisants dans de nombreux cas d'utilisation en raison de leur structure complexe et de leur coût d'installation très élevé, ce qui est particulièrement vrai pour des systèmes devant fonctionner avec sécurité en présence de nombreuses sources de signaux parasites. Un autre inconvénient réside dans le fait que les systèmes connus sont peu souples et ainsi difficilement adaptables à des cas d'utilisation différents. Ainsi chaque cas d'utilisation spécifique exige une conception nouvelle impliquant des modifications importantes d'un cas à l'autre.

La présente invention a pour objectif de pallier aux inconvénients des procédés et systèmes connus, qui viennent d'être énoncés.

Pour atteindre ce but, le procédé selon l'invention est caractérisé en ce qu'un message échangé entre le poste central et un poste local comporte des portions de synchronisation, d'adresse et de données, chaque portion comprenant un nombre spécifique et différent de chiffres binaires et en ce que l'on soumet chaque message à la réception à une vérification de sa structure en vue d'une détection d'erreur.

Selon une caractéristique avantageuse de l'invention, chaque message est transmis au moins deux fois et on compare les deux messages reçus quant à leur identité.

Selon une autre caractéristique avantageuse de l'invention, chaque chiffre binaire est codé en un nombre d'états logiques spécifiques, qui constituent le signal modulant d'une onde porteuse et on peut transmettre des messages à des postes ayant la même adresse à des vitesses de transmission différentes sélectivement recevables dans lesdits postes.

Selon encore une autre caractéristique avantageuse de l'invention, pour assurer une transmission simultanée de messages entre le poste central et un poste local et un autre poste local et le poste central, on utilise des fréquences porteuses différentes tout en transmettant les messages à la même vitesse.

Le système pour la mise en oeuvre du procédé selon l'invention est caractérisé en ce qu'un récepteur comprend un circuit de vérification et de traitement des messages comportant des moyens de détection d'erreur, de démodulation et de décodage.

Selon une caractéristique avantageuse de ce système, un récepteur comporte un compteur de la durée des chiffres binaires, adapté pour faire la distinction entre des chiffres binaires de synchronisation, d'adresse et de données, et un compteur du nombre de chiffres binaires des différentes portions d'un message, pour établir une distinction entre les portions de synchronisation, d'adresse et de données d'un message.

Selon encore une autre caractéristique avantageuse du système selon l'invention, un récepteur comporte un registre à décalage adapté pour recevoir la portion de données de chacun des deux messages répétés, un registre intermédiaire adapté pour recevoir du registre à décalage le premier des deux messages lorsque celui-ci reçoit le deuxième message et un moyen comparateur des contenus des deux registres quant à leur identité, chacun des registres étant remis à zéro à l'attente du message suivant.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 est un schéma bloc d'un système de télécommande selon la présente invention.

La figure 2 est une représentation schématique d'une séquence de messages selon l'invention.

La figure 3 est une représentation schématique de la forme d'un message selon l'invention.

La figure 4 illustre le codage des chiffres binaires et de la synchronisation de mot selon la présente invention.

La figure 5 montre le schéma bloc d'un dispositif émetteur prévu dans un poste local réalisé sous forme d'un module bidirectionnel selon l'invention.

La figure 6 est un schéma bloc du dispositif récepteur d'un poste local, selon la présente invention.

La figure 7 représente le schéma bloc d'un démodulateur d'un dispositif récepteur selon la figure 6.

La figure 8 illustre de façon schématique le fonctionnement d'un dispositif récepteur de télécommande selon l'invention ; et

La figure 9 est un organigramme explicitant le fonctionnement du récepteur selon l'invention.

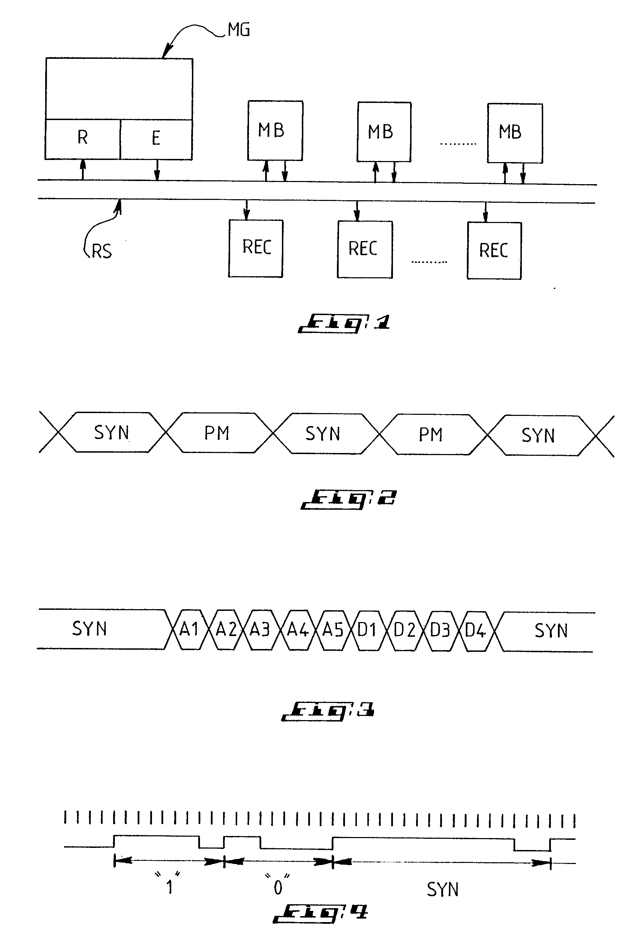

En se reportant à la figure 1, on constate qu'un système de télécommande selon l'invention comprend un poste central réalisé sous forme d'un module de gestion MG pourvu de dispositifs récepteurs R et émetteurs E, qui est relié par l'intermédiaire du réseau électrique RS à un certain nombre de postes locaux pouvant être réalisés sous forme de récepteurs simples REC ou de modules bidirectionnels MB pouvant fonctionner en mode récepteur et en mode émetteur.

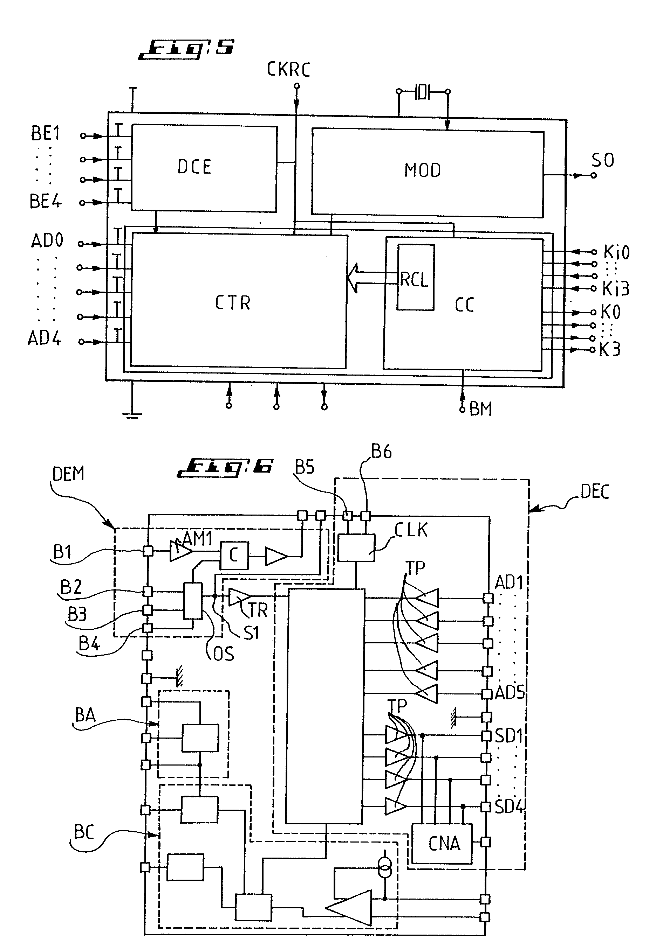

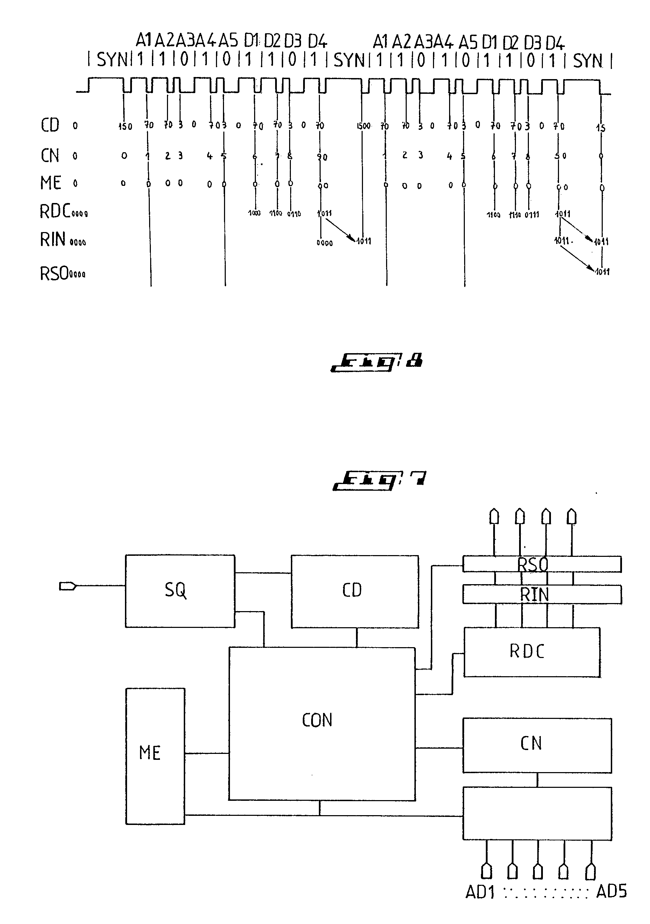

Comme le montre la figure 2, un message selon l'invention, par exemple transmis par le module de gestion MG, à un récepteur REC ou un module MB ou par un module MB au module de gestion MG, à travers le réseau RS, comprend une portion de synchronisation SYN et une portion de mot PM. Chaque message est répété deux fois pour des raisons qui seront expliquées plus loin. Selon la figure 3, chaque portion de mot PM comporte une portion d'adresse de quatre chiffres binaires A1 à A5 et une portion de données pourvue de quatre chiffres binaires D1 à D4.

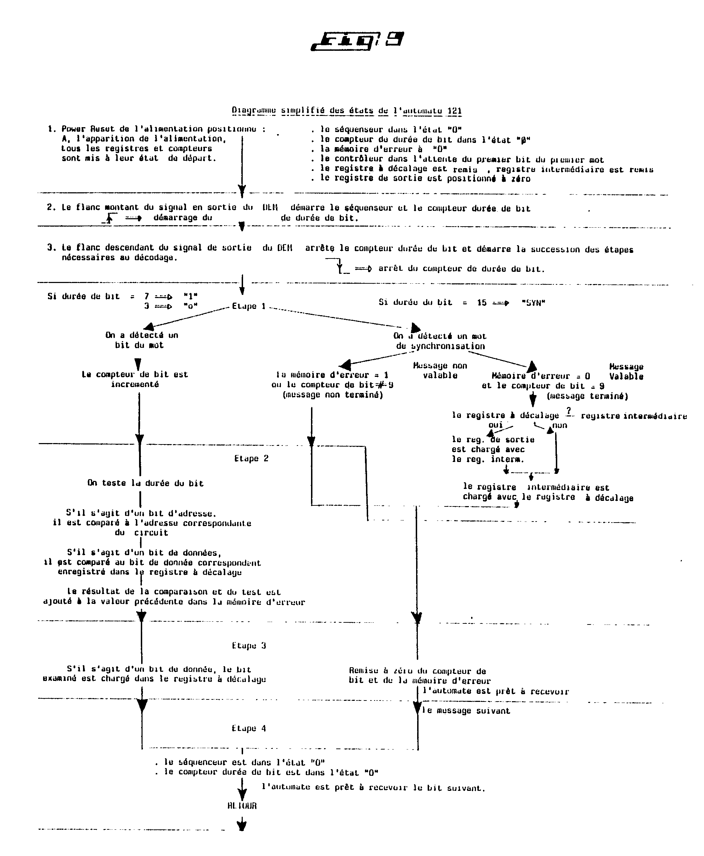

En se référant à la figure 4, on constate qu'un chiffre binaire de valeur "1" est constitué d'une séquence de 9 états logiques, à savoir 7 états hauts et 2 états bas. Un chiffre binaire de valeur "0" est codé en 9 états logiques successifs à savoir 3 états hauts et 6 états bas. La portion de synchronisation de mot SYN est constituée d'une séquence de 18 états logiques, à savoir 15 états hauts et 3 états bas.

Le message présentant la forme qui vient d'être énoncée et comportant des chiffres binaires se composant par une séquence spécifique d'états logiques constitue le signal modulant d'une onde porteuse. Le module de gestion MG et chaque module bidirectionnel MB pouvant fonctionner en mode d'émission et en mode de réception, on prévoit selon l'invention deux bandes ou fréquences porteuses différentes de manière à obtenir deux bandes de fréquence bien séparées. Ainsi le module de gestion MG peut interroger selon un procédé bien connu de multiplexage les différents postes locaux, c'est-à-dire les récepteurs simples REC et les modules bidirectionnels MB en utilisant une des deux bandes de fréquences tout en pouvant recevoir simultanément une réponse d'un des modules MB qui utiliserait alors l'autre bande de fréquences. A titre d'exemple les deux bandes de fréquence pourraient comporter des fréquences centrales respectivement de 105 et 125 kilohertz. Pour pouvoir distinguer les états hauts des états bas dans des séquences d'états constituant les chiffres binaires des valeurs "1" et "0", ces états modulent les ondes porteuses de façon que l'état "1" est représenté par la fréquence centrale respective + 10% tandis que l'état "0" est représenté par une fréquence égale à la fréquence centrale -10%.

Selon une caractéristique essentielle de l'invention on peut adresser indépendamment les récepteurs simples REC et les modules bidirectionnels MB, même si ceux-ci présentent la même adresse. Pour cela on travaille avec une vitesse réduite pour les REC dont la vitesse d'accès est moins critique. Ceci signifie que la vitesse de transmission des messages est différente selon qu'il s'agit d'un dialogue entre le module de gestion MG et un module bidirectionnel MB ou d'un contact entre le module de gestion et un récepteur REC. Cet objectif est atteint par exemple en transmettant les messages du module de gestion aux postes locaux REC, chacun représenté par un récepteur simple, à la fréquence de 5 ou 3 kilohertz, tandis que le dialogue entre les modules de gestion et les postes locaux réalisés sous forme de modules bidirectionnels MB peut être effectué à la vitesse ou la fréquence de transmission de 10 kilohertz.

Ainsi, on comprend aisément que le multiplexage en fréquence de la modulation double le nombre de messages pouvant transiter sur le réseau électrique par seconde et l'utilisation de deux fréquences de transmission écartées permet de doubler le nombre de postes locaux. Ainsi, tout en ne disposant que de 5 chiffres binaires d'adresse, ce qui permet d'obtenir 32 adresses différentes, le système selon l'invention tel que représenté à la figure 1 comporte 32 modules bidirectionnels MB et 32 récepteurs simples REC. Bien entendu, en augmentant encore le nombre de fréquences de transmission, on pourrait augmenter davantage le nombre de postes locaux à adresser sans pour autant augmenter le nombre de chiffres binaires réservés pour définir une adresse.

En se reportant aux figures 5 à 7 on décrira ci-après la structure des dispositifs émetteurs et récepteurs qui équipent un poste local selon l'invention.

Un dispositif récepteur d'un poste local, soit du type REC, soit du type MB, et le cas échéant également du module de gestion, comprend essentiellement, selon la figure 6 un circuit démodulateur DEM, et un dispositif décodeur DEC ainsi que des blocs d'alimentation BA et de comparateur BC.

Les signaux de télécommande en provenance du réseau RS et modulés en fréquence comme cela vient d'être décrit, sont traités dans le démodulateur DEM qui est du type à boucle de verrouillage de phase constitué essentiellement d'un comparateur C, d'un oscillateur OS à commande par tension du type VCO et d'un filtre de boucle externe au circuit. A cette fin sont prévues les bornes de connexion B2, B3 et B4. Comme le montre la figure, le comparateur C reçoit à une entrée le signal reçu à la borne d'entrée B1, par l'intermédiaire d'un amplificateur AM1 et est relié par son autre entrée à l'oscillateur OS. On retrouve le signal démodulé à la sortie S1 du circuit oscillateur OS. Le signal est transmis au décodeur DEC par l'intermédiaire d'une bascule de Schmitt TR qui supprimera le bruit présent dans le signal démodulé.

Le décodeur DEC est adapté pour démarrer à la réception de la portion de synchronisation d'un message. Il compte les chiffres binaires et mesure leur durée, comme cela sera expliqué de façon détaillée plus loin, grâce à un signal d'horloge en provenance d'une source d'horloge CLK déterminée par une résistance et une capacité externe (non représentées) mais reliée aux bornes de connexion B5 puis B6. Le décodeur décode et mémorise un message reçu. Il possède cinq entrées d'adresse AD1 à AD5 reliées à un commutateur approprié (non représenté) dont les positions déterminent l'adresse du récepteur. Le dispositif décodeur présente quatre sorties de données SD1 à SD4 auxquelles il transmet les données. Les entrées d'adresse et les sorties de données sont reliées chacune par un dispositif tampon TP à la partie de décodage. Les données de sortie sont également transmises à un convertisseur numérique-analogique CNA qui est adapté pour transformer une donnée numérique (ici de quatre chiffres binaires) en un signal analogique proportionnel à la donnée numérique. Le signal analogique peut par exemple varier de 0 volt pour la donnée 0000 à 5 volts pour la donnée 1111 par paliers de 0,33 volt. Si deux messages consécutifs ont le même contenu, quant à leurs adresses et leurs données, et si l'adresse est identique à celle présente aux entrées AD1 à AD5, les données sont transmises sur les quatre sorties SD1 à SD4. Le codage de chaque chiffre binaire des portions d'adresse et de données d'un message par 9 états successifs et la transmission de deux messages consécutifs identiques permet d'éliminer les messages non valables par exemple perturbés par le bruit présent sur le réseau.

Pour pouvoir accomplir sa fonction complexe, le dispositif décodeur comporte essentiellement, selon la figure 7, un séquenceur SQ, un compteur de durée de chiffres binaires CD, un compteur du nombre de chiffres binaires CN, un registre à décalage RDC à quatre sorties relié à un registre intermédiaire RIN dont les quatre sorties sont connectées à un registre de sortie RSO. Les sorties de ce registre constituent les sorties reliées au dispositif tampon représenté à la figure 5. Le fonctionnement de ces différents circuits sont contrôlés par un circuit contrôleur CON. Le décodeur comporte en outre une mémoire d'erreur ME. Celui-ci est incrémenté à chaque détection d'une erreur. Le dispositif démodulateur est conçu de façon à détecter quatre types d'erreur. Dans le cas des valeurs données précédemment, il y a erreur lorsqu'un chiffre binaire est supérieur à 16 périodes d'horloge comptées par le compteur de durée de chiffre binaire CD. Il y a également erreur lorsque le nombre de chiffres binaires détectés entre deux portions de synchronisation SYN est supérieur à 9, lorsque l'adresse d'un message n'est pas celle présente aux entrées d'adresse AD1 à AD5 et lorsque les données des deux messages successifs répétés sont différentes.

Pour comprendre la structure des différents circuits consécutifs du dispositif décodeur DEC, représenté aux figures 6 et 7, on décrira ci-après le fonctionnement de ce dispositif en se reportant à la figure 8. Dans le message représenté, la portion d'adresse comporte les cinq chiffres binaires d'adresse successifs de la valeur 01011 tandis que le mot de données comporte les chiffres binaires 1011.

Comme on le voit sur la figure, avant la réception du signal de synchronisation SYN, le compteur de durée de chiffres binaires CD, le compteur de nombre de chiffres binaires CN, la mémoire d'erreur ME, le registre à décalage RDC, le registre intermédiaire RIN et le registre de sortie RSO sont à l'état zéro. Le flanc montant du signal de sortie du démodulateur DEM (sortie S1) fait démarreur le séquenceur SQ et le compteur de durée de chiffre binaire CD. Le flanc descendant du signal de sortie arrête le compteur de durée CD et fait démarrer la succession des étapes de traitement nécessaires au décodage du message. On constate qu'à la fin de la période de synchronisation le compteur de durée CD est à la position 15 et est ensuite remise à zéro. Le compteur de nombre de chiffres binaires CN et les différents registres sont toujours à l'état zéro. La mémoire d'erreur l'est également dans la mesure où le compteur de durée CD n'a pas constaté une durée supérieure à 16 périodes d'horloge.

A la réception du flanc montant du premier chiffre binaire A1 du mot d'adresse, le compteur de durée CD recommence à compter et s'arrête à la position 7 conformément aux définitions données plus haut, ce qui est la position correcte pour la réception d'un chiffre binaire de valeur "1". Le compteur de nombre de chiffres binaires est à ce moment correctement à la position "1". Pendant toute la période de traitement du mot d'adresse, les registres restent à l'état "0". A la réception du deuxième chiffre binaire d'adresse A2, le compteur de durée va à nouveau jusqu'à la position correcte 7 tandis que le compteur de nombre de chiffres binaires CN s'arrête à la position 2. Le troisième chiffre binaire présente la valeur "0" déterminée par trois états hauts. Par conséquent la position correcte du compteur de durée est trois tandis que le compteur de nombre de chiffres binaires s'arrête également à cette position dans la mesure où il vient de constater le troisième chiffre binaire du mot d'adresse. A la fin du mot d'adresse, c'est-à-dire la suite de la réception du cinquième chiffre binaire d'adresse à 5, le compteur de nombre de chiffres binaires est à la position 5. On constate qu'il a été incrémenté à la réception de chaque chiffre binaire.

Les chiffres binaires de données D1 à D4 sont traités de la même manière et sont introduits dans le registre à décalage RDC, comme cela ressort du schéma de la figure 8. A la fin de la première réception du message, le registre intermédiaire RIN est toujours à l'état "0". Son contenu est comparé à celui du registre à décalage. Si les contenus sont différents comme dans le cas représenté, le contenu du registre à décalage est chargé dans le registre intermédiaire. Le contenu du registre de sortie n'est pas modifié. On constate que le chargement du contenu du registre à décalage dans le registre intermédiaire se fait pendant la réception de la portion de synchronisation SYN du message suivant qui est la répétition du message qui vient d'être reçu. Le traitement est le même que celui qui vient d'être décrit. A la fin de la réception du mot de données, le registre à décalage est à la position 1011. Le contenu du registre intermédiaire étant égal au registre à décalage, le contenu du registre intermédiaire est transféré dans le registre de sortie et celui du registre à décalage est chargé dans le registre intermédiaire. Après la réception d'un message, par un dispositif de remise à zéro interne, les compteurs et registres sont remis à l'état zéro.

Le fonctionnement du dispositif démodulateur, qui vient d'être décrit, est représenté de façon schématique sur l'organigramme suivant la figure 9. On constate que le décodage s'effectue lors des cinq périodes de l'horloge du décodeur qui suivent le flanc descendant du signal de sortie du démodulateur correspondant à la dernière synchronisation de mot. Un flanc montant de ce dernier survenant pendant cet intervalle de temps empêche le traitement complet du chiffre binaire, ou de la synchronisation de mot en cours du décodage. Toute détection d'une synchronisation de mot ultérieur met le décodeur en attente du premier chiffre binaire de la première version du message suivant à répéter. Le séquenceur détecte le flanc montant de signal du démodulateur et fournit l'horloge du compteur. Il détecte ensuite le flanc descendant et arrête le compteur de durée de vie. Il fournit alors les horloges nécessaires au fonctionnement du contrôleur. Celui-ci fournit à partir de l'état du compteur de durée la valeur du chiffre binaire au registre à décalage et génère les signaux d'activation du compteur de nombre des chiffres binaires, de la mémoire d'erreur, du registre à décalage et du registre de sortie. Suivant le rang du chiffre binaire détecté, le compteur de chiffre binaire multiplexe soit le chiffre binaire d'adresse soit le chiffre binaire de données précédemment enregistrées vers un comparateur d'égalité. S'il y a erreur, celle-ci est mémorisée.

En se reportant à la figure 5 on décrira ci-après la structure du dispositif émetteur d'un module bidirectionnel MB.

Ce dispositif émetteur comprend un détecteur de changement d'état DCE, un circuit de transmission CTR, un circuit modulateur MOD et un circuit de commande et de contrôle CC.

On constate que le détecteur de changement d'état DCE comporte quatre bornes d'entrée BE1 à BE4 qui sont connectées aux quatre sorties de données SD1 à SD4 du récepteur représenté à la figure 6. Si un changement d'état intervient et est détecté sur une de ces quatre entrées BE1 à BE4, le détecteur de changement d'état envoie au circuit de transmission un signal de démarrage qui fait démarrer le processus de transmission. Le message à transmettre comporte 9 chiffres binaires, à savoir cinq chiffres d'adresse et quatre chiffres binaires de données comme le message reçu par le récepteur. Les chiffres binaires sont codés de la manière décrit plus haut. Les cinq chiffres binaires d'adresse sont formés par les cinq valeurs binaires présentes sur les entrées AD0 à AD4. Les quatre chiffres binaires de données sont fournis par le registre RCL du circuit de contrôle CC.

Si l'entrée BM est inactive, le circuit de contrôle CC est configuré pour décoder un caractère d'un clavier à 16 touches en forme de matrice, connecté aux lignes KI0 à KI3 et K0 à K3. Le code de la touche enfoncée est transféré dans le registre RCL. Si l'entrée de mode BM est active, le contenu seulement des lignes KI0 à KI3 est transféré dans le registre RCL. Cette possibilité permet d'envoyer un mot de quatre chiffres binaires fourni par un circuit annexe extérieur.

Le message à cinq chiffres binaires d'adresse et à quatre chiffres binaires de données est codé par le circuit de transmission CRT et transmis au modulateur MOD.

Ce modulateur comporte un oscillateur à quartz et un circuit d'horloge. Il est constitué d'un diviseur programmable contrôlé par le signal modulant en provenance du circuit de transmission. Les deux fréquences de transmission étant ainsi obtenues à partir d'un quartz, il en résultera une très grande stabilité de ces fréquences. Le signal à la sortie SO est modulée en fréquence, mais est purement logique et un filtrage le rendra sinusoïdal pour l'injecter sur le réseau.

Il est encore à noter que tout le fonctionnement de l'émetteur est séquencé par un signal d'horloge CKRC, qui fixe aussi la vitesse de transmission.

Dans l'exemple qui vient d'être décrit et qui est représenté aux figures, on a choisi un format de message de 5 chiffres binaires d'adresse et de 4 chiffres binaires de données. Bien entendu le système selon l'invention peut fonctionner à des formats de message différents. Les modifications à apporter aux différents dispositifs et circuits est à la portée de l'homme de l'art et nécessite aucune explication spécifique. Ainsi, on pourrait utiliser un format de messages de 8 chiffres binaires d'adresse et un chiffre binaire de données. Le format de message est fonction du nombre de postes locaux à contrôler et des données à transmettre. Les différents modules bidirectionnels sont adaptés pour émettre un message chaque fois qu'ils sont interrogés, chaque fois que l'émetteur détecte un changement d'état à ses bornes d'entrée BE1 à BE4. Le contenu du message peut être soit le code d'une touche d'un clavier ou un mot de quatre chiffres binaires fourni par d'autres circuits.

On constate que le système selon l'invention présente une structure simple et est insensible aux parasites et aux bruits. Le système est du type multifonction. Ainsi le système selon l'invention peut être utilisé pour contrôler et commander un grand nombre d'appareils ou dispositifs de commande de certaines fonctions ou processus, qui sont à surveiller et commander dans tout genre d'industrie appropriée, par exemple dans l'industrie chimique. On pourrait ainsi surveiller et commander des capteurs de toute nature appropriée. L'invention pourrait être utilisée pour la gestion d'énergie, d'éclairage, la détection d'intrusion ou d'incendie etc... .

Une fabrication intéressante est dans le domaine de la sécurité des prises de courant d'une habitation. Chaque prise pourrait être équipée d'un module bidirectionnel et possède une adresse. S'il n'y a pas de fiche connectée à une prise et si l'appareil connecté n'est pas en service, le module de gestion centrale le détecte et met la prise hors tension. Si l'appareil connecté est mis en service, le dispositif électronique le détecte et met la prise sous tension. Cette application peut être complétée par une programmation des heures d'utilisation de manière à obtenir une gestion automatisée des appareils électriques.

**Revendications**

1. Procédé de télécommande, par un poste central, d'une multitude de postes locaux équipés d'au moins un dispositif récepteur et reliés au poste central à travers le réseau électrique, caractérisé en ce qu'un message échangé entre le poste central (MG) et un poste local (REC, MB) comporte des portions de synchronisation (SYN), d'adresses et de données (PM), chaque portion comprenant un nombre spécifique et différent de chiffres binaires et en ce que l'on soumet chaque message à la réception à une vérification de sa structure en vue d'une détection d'erreurs et en ce que chaque message est transmis au moins deux fois successivement et on compare les deux messages reçus quant à leur identité.

2. Procédé selon la revendication 1, caractérisé en ce que chaque chiffre binaire est codé en un nombre d'états logiques spécifiques, qui constitue le signal modulant d'une onde porteuse.

3. Procédé selon l'une des revendications précédentes, caractérisé en ce que l'on transmet des messages à des postes locaux ayant la même adresse à des vitesses de transmission différentes, sélectivement recevable dans lesdits postes.

4. Procédé selon l'une des revendications précédentes, caractérisé en ce que pour assurer une transmission simultanée de messages entre le poste central et un poste local et un poste local et le poste central en utilisent les fréquences porteuses différentes tout en transmettant les messages à la même vitesse.

5. Système pour la mise en oeuvre du procédé selon l'une des revendications précédentes, caractérisé en ce qu'un dispositif récepteur comprend un circuit de vérification et de traitement des messages, comportant des moyens de détection d'erreurs, de démodulation (DEM) et de décodage (DEC).

6. Système selon la revendication 5, caractérisé en ce qu'un récepteur comporte un compteur de la durée des chiffres binaires (CD), adaptés pour faire la distinction entre des chiffres binaires de synchronisation (SYN), d'adresses (A1 à A5) et de données (D1 à D4), et un compteur du nombre de chiffres binaires (DN) des différentes portions de message, pour établir une distinction entre les portions de synchronisation, d'adresse et de données d'un message.

7. Système selon la revendication 5 ou 6, caractérisé en ce qu'un récepteur comporte un registre à décalage (RDC) adapté pour recevoir la portion de données de chacun des deux messages répétés, un registre intermédiaire (RIN) adapté pour recevoir du registre à décalage le premier des deux messages lorsque celui-ci reçoit le deuxième message, et un moyen comparateur des contenus des deux registre quant à leur identité, chacun des registres étant remis à zéro à l'attente du message suivant à répéter.

8. Système selon l'une des revendications 5 à 7, caractérisé en ce qu'un poste local réalisé sous forme d'un module bidirectionnel (MB) comporte un dispositif émetteur adapté pour transmettre des messages au poste central, lorsqu'ils sont interrogés ou lorsqu'ils constatent un changement d'état dans le poste local.

_Fig. 1_

_Fig. 2_

_Fig. 3_

_Fig. 4_

Fig. 5

Fig. 6

EP 0 317 541 A1

Fig. 8

Fig. 7

# Fig 9

Diagramme simplifié des états de l'automate 121

1. Power Reset de l'alimentation positionne :
   A, l'apparition de l'alimentation,
   tous les registres et compteurs
   sont mis à leur état de départ.

   . le séquenseur dans l'état "0"
   . le compteur du durée de bit dans l'état "0"
   . la mémoire d'erreur à "0"
   . le contrôleur dans l'attente du premier bit du premier mot
   . le registre à décalage est remis , registre intermédiaire est remis
   . le registre de sortie est positionné à zéro

2. Le flanc montant du signal en sortie du DEM démarre le séquenseur et le compteur durée de bit
   $\Gamma$ ==> démarrage du        de durée de bit.

3. Le flanc descendant du signal de sortie du DEM arrête le compteur durée de bit et démarre la succession des étapes
   nécessaires au décodage.
   $\neg L$ ==> arrêt du compteur de durée de bit.

Si durée de bit = 7 ==> "1"
                  3 ==> "0"        — Etape 1 —        Si durée du bit = 15 ==> "SYN"

On a détecté un                                          On a détecté un mot
bit du mot                                               de synchronisation

Le compteur de bit est        la mémoire d'erreur = 1    Message non    Mémoire d'erreur = 0        Message
incrémenté                    ou le compteur de bit≠9    valable        et le compteur de bit = 9   Valable
                              (message non terminé)                              (message terminé)

                                                                       le registre à décalage $\frac{?}{}$ registre intermédiaire
                                                                          oui           non
                                                                       le reg. de sortie
                                                                       est chargé avec
                              Etape 2                                   le reg. interm.

On teste la durée du bit                                                le registre   intermédiaire est
                                                                       chargé avec le registre à décalage

S'il s'agit d'un bit d'adresse,
il est comparé à l'adresse correspondante
       du circuit

S'il s'agit d'un bit de données,
il est comparé au bit de donnée correspondent
 enregistré dans le registre à décalage

Le résultat de la comparaison et du test est
ajouté à la valeur précédente dans la mémoire d'erreur

                              Etape 3

S'il s'agit d'un bit de donnée, le bit        Remise à zéro du compteur de
examiné est chargé dans le registre à décalage bit et de la mémoire d'erreur
                                                       l'automate est prêt à recevoir

                                                       le message suivant

                              Etape 4

        . le séquenceur est dans l'état "0"
        . le compteur durée de bit est dans l'état "0"
                       l'automate est prêt à recevoir le bit suivant.

                       RETOUR

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 541 052 (ELECTRICITE DE FRANCE) * Page 4, ligne 1 - page 12, ligne 13; figures 1-6 * --- | 1-8 | H 02 J 13/00 H 04 Q 9/14 |
| Y | US-A-4 091 361 (EICHELBERGER) * Revendications 1-8 * --- | 1,5-7 | |
| Y | US-A-4 680 508 (RUCKI) · * Colonne 4, lignes 38-54; figures 1,2 * --- | 2 | |
| Y | FR-A-2 302 653 (THEIMEG-ELEKTRONIKGERÄTE) * Revendications 1,2; figure 3 * --- | 3 | |
| Y | WIRELESS WORLD, vol. 85, no. 1528, décembre 1979, pages 46-51; N. McARTHUR et al.: "The intelligent plug" * Page 50, colonne de droite, dernier alinéa - page 51, colonne de gauche, ligne 7 * ----- | 4,8 | DOMAINES TECHNIQUES RECHERCHES (Int. Cl.4) H 02 J H 04 Q G 08 C |

Le présent rapport a été établi pour toutes les revendications

| Lieu de la recherche | Date d'achèvement de la recherche | Examinateur |
|---|---|---|
| LA HAYE | 10-01-1989 | WANZEELE R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)